# EUROPÄISCHE PATENTSCHRIFT

(11) **EP 2 713 093 B1**
(45) Veröffentlichungstag und Bekanntmachung des Hinweises auf die Patenterteilung: **14.12.2016**
(21) Anmeldenummer: 13186365.6
(22) Anmeldetag: 27.09.2013
(51) Int. Cl.: F16P 3/12, F16P 3/14

(54) **Bumper mit integriertem Sensor**
Bumper with integrated sensor
Pare-chocs avec capteur intégré

(30) Priorität: 28.09.2012 DE 102012217762
(43) Veröffentlichungstag der Anmeldung: 02.04.2014
(73) Patentinhaber: HOMAG GmbH, 72296 Schopfloch (DE)
(72) Erfinder: Gringel, Martin, 72479 Straßberg (DE)
(74) Vertreter: Hoffmann Eitle

(56) Entgegenhaltungen:
- EP-A1- 2 628 993
- DE-T2- 60 023 938
- DE-U1-202009 007 035

## Beschreibung

### Technisches Gebiet

Die vorliegende Erfindung betrifft eine Bearbeitungsmaschine zum Bearbeiten von Werkstücken, die rein beispielhaft aus Holz, holzähnlichen Werkstoffen, Kunststoff oder Metall bestehen können. Insbesondere sind hierbei Werkstücke gemeint, die im Bereich der Möbel- oder Bauzulieferindustrie benötigt werden.

### Stand der Technik

Als druckschriftlicher Stand der Technik ist die EP 1 918 629 A2 bekannt, die eine Bearbeitungsmaschine betrifft, die mit einem Kontaktsensor und mit einem kontaktlos arbeitenden Sensor versehen ist. Dieser Vorrichtung liegt der Gedanke zugrunde, die Annäherung eines Gegenstands oder einer Person an die Maschineneinheiten möglichst frühzeitig zu erfassen, ohne dass dies einen Stillstand der Maschine verursachen muss. Hierzu weist die Bearbeitungsmaschine einen kontaktlos arbeitenden Sensor auf, der an einer verfahrbaren Maschineneinheit vorgesehen ist. Der kontaktlos arbeitende Sensor ist derart angeordnet, dass er einen unterhalb und schräg vor dem freien Ende des Auslegers liegenden Bereich erfasst.

Ferner offenbart die EP 2 253 417 A1 eine Bearbeitungsmaschine mit einem Sicherheitsscanner, wobei die verfahrbare Bearbeitungseinheit einen ersten Sensor aufweist, und ferner ein zweiter Sensor vorgesehen ist, der in einem dynamischen Bereich anwesende Gegenstände und Personen erfassen kann, bevor die Bearbeitungseinheit in diesen dynamischen Bereich verfahren wird.

Um die Bedienbarkeit und effektive Nutzung des Aufstellungsraums einer CNC-Maschine gut nutzen zu können, werden in der Praxis zunehmend Kontaktsensoren an Bearbeitungseinheiten vorgesehen (sogenannte Bumper). Allerdings ist die Verfahrgeschwindigkeit der Bearbeitungseinheit aus Sicherheitsgründen begrenzt, um im Falle eines Kontakts der Bearbeitungseinheit mit einer Person bzw. einem Gegenstand die bewegte Bearbeitungseinheit zeitnah zum Stillstand bringen zu können. Dies liegt darin begründet, dass erst bei einem Kontakt mit dem Kontaktsensor die Sicherheitsmaßnahmen, insbesondere das Anhalten, der Bearbeitungseinheit eingeleitet werden können. Bei Bumpern muss in diesem Zusammenhang der Eindrückweg beachtet werden, welcher möglichst gering ausgelegt werden sollte.

Eine Möglichkeit zur Erhöhung der Arbeitsgeschwindigkeit von CNC-Maschinen mit solchen Kontaktsensoren ist deshalb der zusätzliche Einsatz einer vorgelagerten Bereichsabsicherung, beispielsweise in Form einer Lichtschranke, welche beim Eintritt des Bedieners in diesen Bereich sofort die Arbeitsgeschwindigkeit der Maschine reduziert. Auch bekannt ist der Einsatz von Trittmatten, die in einem Sicherheitskonzept mit Bumpern kombiniert werden.

Allerdings ist es nachteilig, dass der Bediener den durch die Bereichsabsicherung definierten Bereich verlassen muss, um wiederum eine hohe Produktivität der Maschine durch eine Erhöhung der Arbeitsgeschwindigkeit zu erreichen. Ferner muss zur Definition einer vorgelagerten Bereichsabsicherung ein

### Geänderte Beschreibungsseiten 3 und 3A

Lichtschrankensystem installiert bzw. Trittmatten ausgelegt werden.

Ferner offenbart die DE 600 23 938 T2 ein Bearbeitungssystem mit optischen Erfassungsbahnen die auch durch mechanische Verformungen ausgelöst werden können.

### Gegenstand der Erfindung

Es ist ein Ziel der vorliegenden Erfindung, die zuvor genannten Probleme zu beheben, und eine Bearbeitungsmaschine mit einem hohem Sicherheitsstandard bereitzustellen, die durch große Bearbeitungsgeschwindigkeiten eine hohe Produktivität sicherstellt.

Diese Aufgabe wird erfindungsgemäß durch eine Bearbeitungsmaschine gemäß Anspruch 1 gelöst. Weitere beispielhafte Ausführungsformen sind in den abhängigen Ansprüchen genannt.

Dabei ist es ein Kerngedanke der vorliegenden Erfindung, den insbesondere in Fahrtrichtung (X) an einer Bearbeitungseinheit einer Bearbeitungsmaschine vorgesehenen Kontaktsensor mit einem weiteren, kontaktlos arbeitenden Sensor zu kombinieren, welcher kontaktlos arbeitende Sensor in Fahrtrichtung (X) ausgerichtet ist und ein Erfassungsfeld in Fahrtrichtung (X) der Bearbeitungseinheit bereitstellt.

Da das Erfassungsfeld des kontaktlos arbeitenden Sensors in Fahrtrichtung ausgerichtet ist, kann ein dem Kontaktsensor vorgelagerter Bereich überwacht werden, und hieraus geeignete Sicherheitsmaßnahmen abgeleitet werden, wie eine Geschwindigkeitsreduktion, eine Warnmeldung, usw..

Das Erfassungsfeld des kontaktlos arbeitenden Sensors kann jedoch auch winklig zur Fahrtrichtung ausgerichtet sein, beispielsweise in Richtung des Bedieners (Bedienbereichs) oder schräg in Richtung des Untergrundes.

"Erfassungsfeld" im Sinne dieser Anmeldung meint einen Bereich, in dem der kontaktlos arbeitende Sensor Gegenstände

oder Personen erfassen kann. Das Erfassungsfeld kann hierbei linienförmig ausgebildet sein, oder ein Raumvolumen betreffen.

Gemäß der vorliegenden Erfindung umfasst eine Bearbeitungsmaschine ein Maschinenbett sowie eine entlang des Maschinenbetts verfahrbar angeordnete Bearbeitungseinheit, die ein Bearbeitungsaggregat aufweist. Bei einem solchen Bearbeitungsaggregat kann es sich beispielsweise um ein CNC-Bearbeitungsaggregat handeln. Ferner umfasst die Bearbeitungsmaschine einen Kontaktsensor, insbesondere Bumper, der insbesondere in Fahrtrichtung (X) an der Bearbeitungseinheit vorgesehen ist, und zeichnet sich dadurch aus, dass der kontaktlos arbeitende Sensor am Kontaktsensor angebracht ist.

Das Bearbeitungsaggregat wird beispielsweise mit mindestens einem Bearbeitungswerkzeug versehen, das über ein Werkzeugwechselsystem in das Bearbeitungsaggregat eingewechselt wird. Dieses kann beispielsweise eine spanende Bearbeitung an einem Werkstück durchführen. Aber auch andere Bearbeitungsaggregate zur Durchführung einer Bearbeitung im Sinne der DIN 8580 sind denkbar.

Mit "Kontaktsensor" ist im Sinne dieser Erfindung ein Druckschalter, eine Druckschalterleiste und/oder Bumper gemeint. Ein solcher Kontaktsensor gibt ein Signal aus, wenn er mit einem Gegenstand in Berührung kommt und ggf. ein gewisser Eindrückweg überwunden wird.

Der Kontaktsensor kann leistenförmig oder flächenförmig an der Bearbeitungseinheit vorgesehen sein. Auch kann sich der Kontaktsensor aus mehreren einzeln angebrachten Kontaktsensoren zusammensetzen, die im Verbund einen Kontaktsensor an einer Seite der Bearbeitungseinheit definieren.

Erfindungsgemäß ist der kontaktlos arbeitende Sensor am Kontaktsensor angebracht. In einer Zielrichtung der vorliegenden Erfindung ist der kontaktlos arbeitende Sensor deshalb in den Kontaktsensor integriert. Hierzu ist dieser in eine Seitenfläche des Kontaktsensors eingebracht und/oder durch eine Seitenfläche des Kontaktsensors verdeckt ("hinter dem Kontaktsensor") vorgesehen.
Durch Kombination des kontaktlos arbeitenden Sensors mit dem Kontaktsensor kann beispielsweise der Erfassungsbereich in Fahrtrichtung der Bearbeitungseinheit vergrößert werden. Auf diese Weise kann gewissermaßen der Erfassungsbereich des Kontaktsensors durch den kontaktlos arbeitenden Sensor in dieser Richtung vergrößert werden. Folglich wird ein vergrößerter "Pufferbereich" bereitgestellt.

In einer Ausführungsform der vorliegenden Erfindung ist der kontaktlos arbeitende Sensor ausgewählt aus einem kapazitiven Sensor, Lasersensor, Infrarotsensor, Ultraschallsensor, Lasertriangulationssensor und Radarsensor. Diese Sensoren sind relativ kostengünstig verfügbar, und können gut mit dem Kontaktsensor kombiniert werden.

Gemäß der vorliegenden Erfindung ist der kontaktlos arbeitende Sensor in oder hinter eine Seitenfläche des Kontaktsensors eingebracht, und durch in der Seitenfläche des Kontaktsensors vorgesehene Öffnungen oder durch einen durchlässigen Abschnitt der Seitenfläche des Kontaktsensors kann das Erfassungsfeld bereitgestellt werden. Somit kann der kontaktlos arbeitende Sensor in den Kontaktsensor integriert werden.

Ferner kann der Kontaktsensors an einem in vertikaler Richtung unteren Abschnitt einen Vorsprung aufweisen. Auf diese Weise wird die Tiefe des Kontaktsensors an einem unteren Bereich vergrößert, und an dieser Stelle ein zusätzlicher "Puffer" zur Bearbeitungseinheit bereitgestellt. Ferner kann der Kontaktsensor beliebig dreidimensional ausgebildet sein, und kann auch mehrere Vorsprünge in belieben Formen aufweisen.

In einer weiteren Ausführungsform ist das Erfassungsfeld des kontaktlos arbeitenden Sensors an die Geschwindigkeit der Bearbeitungseinheit in Fahrtrichtung anpassbar. Folglich orientiert sich das Erfassungsfeld des kontaktlos arbeitenden Sensors an den aktuellen Anforderungen bzgl. seiner Größe. Fährt beispielsweise die Bearbeitungseinheit mit einer hohen Geschwindigkeit, muss das Erfassungsfeld einen größeren Bereich abdecken, um beim Erfassen einer Person oder eines Gegenstandes ein Abbremsen der Bearbeitungseinheit zu ermöglichen.

Bevorzugt kann Kontaktsensors an einer Sicherheitskabine der Bearbeitungseinheit vorgesehen sein, welche Sicherheitskabine das Bearbeitungsaggregat aufnimmt.

Ferner ist es bevorzugt, dass der Kontaktsensor an einem Abschnitt der Bearbeitungseinheit vorgesehen ist, der quer zur Fahrtrichtung der Bearbeitungseinheit über das Maschinenbett hervorsteht, und in Fahrtrichtung der Bearbeitungseinheit weist.

In einer weiteren Ausführungsform sind mehrere kontaktlos arbeitende Sensoren am Kontaktsensor angebracht, die bevorzugt an einem Randabschnitt des Kontaktsensors vorgesehen sind. Beispielsweise ist es denkbar, die kontaktlos arbeitenden Sensoren an einem Randabschnitt der in Fahrtrichtung weisenden Seite des Kontaktsensors oder an einer Unterkante hiervon anzubringen. Somit können die kontaktlos arbeitenden Sensoren besonders einen bestimmten Bereich überwachen, der für das konkrete Sicherheitskonzept wichtig ist.

### Kurze Beschreibung der Zeichnungen

- Figur 1: zeigt eine perspektivische Ansicht einer ersten Ausführungsform der erfindungsgemäßen Bearbeitungsmaschine.
- Figur 2a: ist eine Detailansicht gemäß der ersten Ausführungsform einer erfindungsgemäßen Bearbeitungsmaschine
- Figur 2b: ist eine alternative Ausführungsform zu der in Figur 2a dargestellten Sensorkombination.

Nachfolgend werden bevorzugte Ausführungsformen der vorliegenden Erfindung unter Bezugnahme auf die beigefügten Zeichnungen beschrieben. In diesem Zusammenhang ist zu erwähnen, dass die beschriebenen Ausführungsformen und deren Varianten und Modifikationen jeweils auch in Einzelmerkmalen miteinander kombiniert werden können, um neue Ausführungsformen auszubilden.

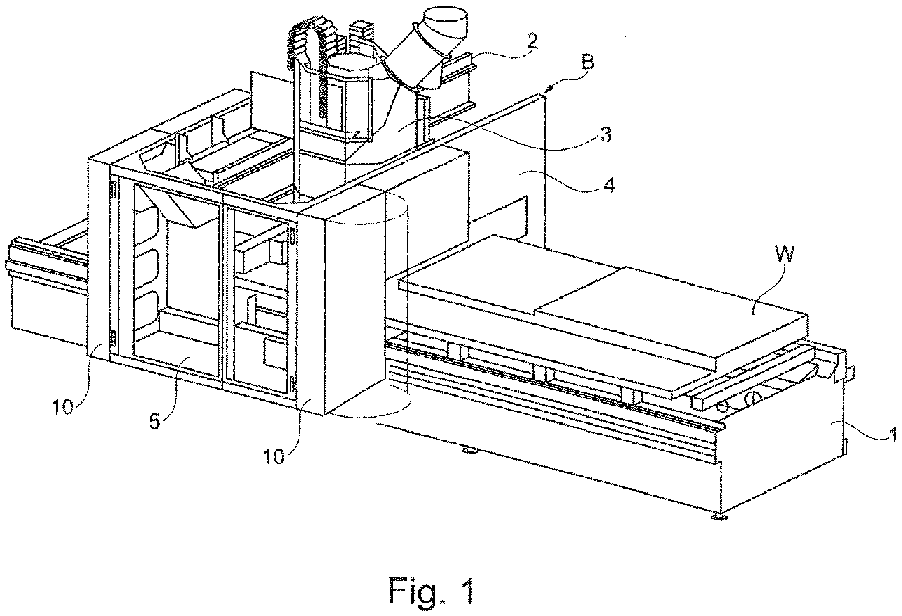

Die in Fig. 1 dargestellte Bearbeitungsmaschine gemäß der vorliegenden Erfindung umfasst ein Maschinenbett 1, das an einer in vertikaler Richtung oberen Seiten einen Auflagebereich für Werkstücke W bereitstellt. Bei den im Rahmen der vorliegenden Erfindung erwähnten Werkstücken handelt es sich bevorzugt um plattenförmige Werkstücke. Diese können beispielsweise aus Holz, Holzwerkstoff, Kunststoff, Metall oder einer Kombination hiervon bestehen.

Am Maschinenbett 1 der Bearbeitungsmaschine ist eine Bearbeitungseinheit B angebracht, die einen verfahrbaren Ausleger 2 aufweist, der von einer Sicherheitskabine 4 umgeben ist. Innerhalb der Sicherheitskabine 4 ist entlang des Auslegers 2 ein Bearbeitungsaggregat 3 in Y-Richtung verfahrbar angebracht. Der Ausleger 2 mit dem Bearbeitungsaggregat 3 und die Sicherheitskabine 4 sind zusammen in X-Richtung entlang des Maschinenbetts 1 verfahrbar.

An einem seitlichen Bereich der Sicherheitskabine 4 sind Türen 5 angebracht, die geöffnet werden können, um Zugang zu einem inneren Bereich der Sicherheitskabine 4 zu erhalten. An weiteren seitlichen Bereichen der Sicherheitskabine 4, die in Y-Richtung über das Maschinenbett hervorstehen und sich an den Bereich anschließen, in dem die Türen 5 an der Sicherheitskabine 4 vorgesehen sind, sind jeweils Bumper (Kontaktsensoren) 10 angebracht. Diese weisen somit ausgehend von der Sicherheitskabine 4 in X-Richtung von dieser weg.

Gemäß der ersten Ausführungsform der vorliegenden Erfindung ist der Bumper 10 mit einem kapazitiven Sensorsystem versehen, das in Form einer elektrisch leitenden Platte, eines Drahtgeflechts, einer Folie usw. im bzw. am Bumper an-bzw. eingebracht ist, oder in Form einer Elektrode, die Teil der Außenfläche des Bumpers ist oder im Bereich des verformbaren Innenkerns des Bumpers 10 eingebracht ist. Auch ist es möglich, den kapazitiven Sensor an der Innenfläche des Bumpers 10 anzubringen.

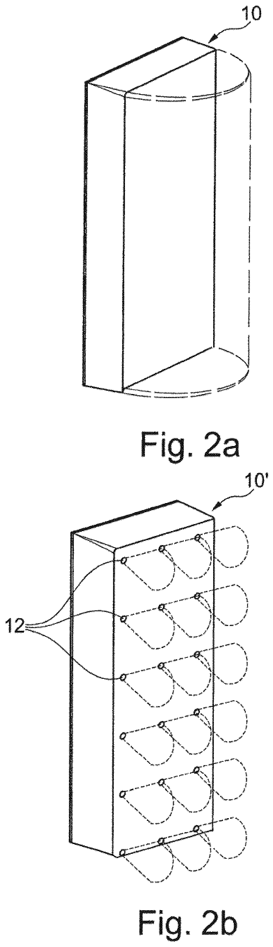

Wie in Figur 2a anschaulich dargestellt, wird durch den Bumper ein halbzylinderförmiges Erfassungsfeld definiert (mit der gestrichelten Linie angedeutet), das von der Seitenfläche des Bumpers 10 ausgeht.

Eine weitere beispielhafte Ausführungsform der vorliegenden Erfindung ist in Figur 2b anschaulich dargestellt. Dieser Bumper 10' gemäß Figur 2b ist mit einem ultraschallbasierten System mit mehreren Ultraschall-Sensor/Empfängermodulen in der äußeren Oberfläche des Bumpers bereitgestellt, wobei die Ultraschall-Sensor/Empfängermodule aufgrund der Auflösung und Reichweitenoptimierung entsprechend verteilt angeordnet sind und ihre Signale durch Öffnungen 12 im Bumper 10'. Die Erfassungsfelder sind in Figur 2b ebenso durch gestrichelte Linien angedeutet. Grundsätzlich ist es in diesem Zusammenhang auch möglich, lediglich einen Ultraschallsensor am Bumper 10' vorzusehen.

Weitere Möglichkeiten für kontaktlose Sensoren sind Radarsensoren oder triangulationsbasierte Systeme, die jeweils in der äußeren Oberfläche des Bumpers eingebracht bzw. angebracht sind.

Gemäß der vorliegenden Erfindung überwacht der kontaktlos arbeitende Sensor einen vor den Bumper vorgelagerten Bereich, welcher sich an der seitlichen Fläche des Bumpers 10, 10' anschließt. Falls eine Person oder ein Gegenstand in diesen vom kontaktlosen Sensor überwachten Bereich eindringt, wird ein Signal an die Steuerung ausgegeben, um beispielsweise die Geschwindigkeit der Schutzkabine 4 zu reduzieren, die Sicherheitskabine 4 vollständig anzuhalten oder ein Warnsignal auszugeben. Damit eine möglichst hohe Bearbeitungsgeschwindigkeit erreicht werden kann, ist die Größe abhängig vom Bremsweg der Sicherheitskabine 4, welcher Bremsweg benötigt wird, um die Sicherheitskabine 4 im Falle eines Hindernisses derart abzubremsen, dass diese auch anhalten kann. Deshalb ist es auch erfindungsgemäß vorgesehen, dass das Erfassungsfeld des kontaktlos arbeitenden Sensors auf die momentane Geschwindigkeit des bewegten Maschinenteils (Sicherheitskabine) abgestimmt wird. In weiteren Modifikationen ist es möglich, die bereits beschriebenen Ausführungsformen mit weiteren Sicherheitskonzepten zu kombinieren. Rein beispielhaft kann die beschriebene Bearbeitungsmaschine zusätzlich abschnittsweise von einem Schutzzaun umgeben werden.

In zuvor beschriebenen Ausführungsformen wurde eine Bearbeitungsmaschine beschrieben, die mit einem Ausleger 2 versehen ist. Allerdings ist die vorliegende Erfindung nicht hierauf beschränkt, sondern eine erfindungsgemäße Bearbeitungsmaschine könnte auch eine Portalmaschine sein.

## Patentansprüche

1. Bearbeitungsmaschine zum Bearbeiten von Werkstücken, mit:
einem Maschinenbett (1) sowie einer entlang des Maschinenbetts (1) verfahrbar angeordneten Bearbeitungseinheit (B), die ein Bearbeitungsaggregat (3) aufweist,
einem Kontaktsensor (10, 10'), der an der Bearbeitungseinheit (B) vorgesehen ist,
einem an der Bearbeitungseinheit vorgesehenen kontaktlos arbeitenden Sensor,
**dadurch gekennzeichnet, dass**
der kontaktlos arbeitende Sensor am Kontaktsensor (10, 10') angebracht und in oder hinter einer Seitenfläche des Kontaktsensors (10, 10') eingebracht ist, wobei der kontaktlos arbeitende Sensor in Fahrtrichtung (X) der Bearbeitungseinheit (B) ausgerichtet ist, und insbesondere ein abschnittsweise vom Kontaktsensor ausgehendes Erfassungsfeld definiert.

2. Bearbeitungsmaschine gemäß Anspruch 1, **dadurch gekennzeichnet, dass** der kontaktlos arbeitende Sensor ausgewählt ist aus einem kapazitiven Sensor, Lasersensor, Infrarotsensor, Ultraschallsensor, Lasertriangulationssensor und Radarsensor.

3. Bearbeitungsmaschine gemäß einem der Ansprüche 1-2, **dadurch gekennzeichnet, dass** der kontaktlos arbeitende Sensor durch in der Seitenfläche des Kontaktsensor vorgesehene Öffnungen (12) oder durch einen durchlässigen Abschnitt der Seitenfläche des Kontaktsensor (10, 10') das Erfassungsfeld bereitstellt.

4. Bearbeitungsmaschine gemäß einem der vorangegangenen Ansprüche, **dadurch gekennzeichnet, dass** der Kontaktsensor (10, 10') insbesondere an einem in vertikaler Richtung unteren Abschnitt einen Vorsprung aufweist.

5. Bearbeitungsmaschine gemäß einem der vorangegangenen Ansprüche, **dadurch gekennzeichnet, dass** die Bearbeitungsmaschine ferner eine Steuereinrichtung aufweist, die eingerichtet ist, die Verfahrgeschwindigkeit der Bearbeitungseinheit (B) zu reduzieren, wenn ein Gegenstand in ein Erfassungsfeld des kontaktlos arbeitenden Sensors eindringt, und die Verfahrgeschwindigkeit der Bearbeitungseinheit (B) weiter zu reduzieren, wenn der Gegenstand vom Kontaktsensor (10, 10') erfasst wird.

6. Bearbeitungsmaschine gemäß einem der vorangegangenen Ansprüche, **dadurch gekennzeichnet, dass** ein Erfassungsfeld des kontaktlos arbeitenden Sensors an die Geschwindigkeit der Bearbeitungseinheit (B) in Fahrtrichtung (X) anpassbar ist.

7. Bearbeitungsmaschine gemäß einem der vorangegangenen Ansprüche, **dadurch gekennzeichnet, dass** der Kontaktsensors (10, 10') an einer Sicherheitskabine (4) der Bearbeitungseinheit (B) vorgesehen ist, welche Sicherheitskabine (4) das Bearbeitungsaggregat (3) aufnimmt.

8. Bearbeitungsmaschine gemäß einem der vorangegangenen Ansprüche, **dadurch gekennzeichnet, dass** der Kontaktsensors (10, 10') an einem Abschnitt der Bearbeitungseinheit (B) vorgesehen ist, der quer zur Fahrtrichtung (X) der Bearbeitungseinheit (B) über das Maschinenbett (1) hervorsteht, und in Fahrtrichtung (X) der Bearbeitungseinheit (B) weist.

9. Bearbeitungsmaschine gemäß einem der vorangegangenen Ansprüche, **dadurch gekennzeichnet, dass** der kontaktlos arbeitende Sensor teilweise in Richtung eines Bedienbereichs ausgerichtet ist.

10. Bearbeitungsmaschine gemäß einem der vorangegangenen Ansprüche, **dadurch gekennzeichnet, dass** mehrere kontaktlos arbeitende Sensoren am Kontaktsensor angebracht sind, die bevorzugt an einem Randabschnitt des Kontaktsensors vorgesehen sind.

11. Bearbeitungsmaschine gemäß Anspruch 10, **dadurch gekennzeichnet, dass** ein kontaktlos arbeitender Sensor in Fahrtrichtung (X) der Bearbeitungseinheit (B) ausgerichtet ist, und ein weiterer kontaktlos arbeitender Sensor in Richtung eines Bedienbereichs ausgerichtet ist.

## Claims

1. Processing machine for processing workpieces, having:
a machine bed (1) and a processing unit (B) which is arranged so as to be movable along the machine bed (1) and which has a processing unit (3),
a contact sensor (10, 10'), which is provided on the processing unit (B),
a contactlessly operating sensor provided on the processing unit,
**characterised in that**
the contactlessly operating sensor is mounted on the contact sensor (10, 10') and introduced into or behind a side face of the contact sensor (10, 10'), wherein the contactlessly operating sensor is oriented in the direction of travel (X) of the processing unit (B), and in particular defines a detection field which in one section starts from the contact sensor.

2. Processing machine according to claim 1, **characterised in that** the contactlessly operating sensor is selected from a capacitive sensor, laser sensor, infrared sensor, ultrasound sensor, laser triangulation sensor and radar sensor.

3. Processing machine according to either of claims 1-2, **characterised in that** the contactlessly operating sensor provides the detection field through openings (12) provided in the side face of the contact sensor or through a permeable section of the side face of the contact sensor (10, 10').

4. Processing machine according to any of the preceding claims, **characterised in that** the contact sensor (10, 10') has a projection in particular on a lower section in the vertical direction.

5. Processing machine according to any of the preceding claims, **characterised in that** the processing machine further has a control device which is designed to reduce the speed of travel of the processing unit (B) when an object enters a detection field of the contactlessly operating sensor, and to further reduce the speed of travel of the processing unit (B) when the object is detected by the contact sensor (10, 10').

6. Processing machine according to any of the preceding claims, **characterised in that** a detection field of the contactlessly operating sensor can be adapted to the speed of the processing unit (B) in the direction of travel (X).

7. Processing machine according to any of the preceding claims, **characterised in that** the contact sensor (10, 10') is provided on a safety cabin (4) of the processing unit (B), which safety cabin (4) receives the processing unit (3).

8. Processing machine according to any of the preceding claims, **characterised in that** the contact sensor (10, 10') is provided on a section of the processing unit (B) which protrudes beyond the machine bed (1) transversely to the direction of travel (X) of the processing unit (B), and points in the direction of travel (X) of the processing unit (B).

9. Processing machine according to any of the preceding claims, **characterised in that** the contactlessly operating sensor is oriented partially in the direction of a control area.

10. Processing machine according to any of the preceding claims, **characterised in that** a plurality of contactlessly operating sensors are mounted on the contact sensor, which are preferably provided on an edge section of the contact sensor.

11. Processing machine according to claim 10, **characterised in that** a contactlessly operating sensor is oriented in the direction of travel (X) of the processing unit (B), and a further contactlessly operating sensor is oriented in the direction of a control area.

## Revendications

1. Machine de traitement pour le traitement de pièces à usiner, avec :
un banc de machine (1) ainsi qu'une unité de traitement (B), qui présente un groupe de traitement (3), agencée de manière mobile le long du banc de machine (1),
un capteur de contact (10, 10'), qui est prévu au niveau de l'unité de traitement (B),
un capteur fonctionnant sans contact prévu au niveau de l'unité de traitement,
**caractérisée en ce que**
le capteur fonctionnant sans contact est monté au niveau du capteur de contact (10, 10') et introduit dans ou derrière une surface latérale du capteur de contact (10, 10'), dans laquelle le capteur fonctionnant sans contact est orienté dans le sens de la marche (X) de l'unité de traitement (B) et définit en particulier un champ de détection partant par section du capteur de contact.

2. Machine de traitement selon la revendication 1, **caractérisée en ce que** le capteur fonctionnant sans contact est sélectionné parmi un capteur capacitif, un capteur laser, un capteur infrarouge, un capteur à ultrasons, un capteur à triangulation laser et un capteur radar.

3. Machine de traitement selon l'une quelconque des revendications 1-2, **caractérisée en ce que** le capteur fonctionnant sans contact met à disposition le champ de détection par des ouvertures (12) prévues dans la surface latérale du capteur de contact ou par une section transparent de la surface latérale du capteur de contact (10, 10').

4. Machine de traitement selon l'une quelconque des revendications précédentes, **caractérisée en ce que** le capteur de contact (10, 10') présente une saillie en particulier au niveau d'une section inférieure dans le sens vertical.

5. Machine de traitement selon l'une quelconque des revendications précédentes, **caractérisée en ce que** la machine de traitement présente en outre un dispositif de commande, qui est conçu pour réduire la vitesse de déplacement de l'unité de traitement (B) lorsqu'un objet pénètre dans un champ de détection du capteur fonctionnant sans contact et pour réduire en outre la vitesse de déplacement de l'unité de traitement (B) lorsque l'objet est détecté par le capteur de contact (10, 10').

6. Machine de traitement selon l'une quelconque des revendications précédentes, **caractérisée en ce qu'**un champ de détection du capteur fonctionnant sans contact peut être adapté à la vitesse de l'unité de traitement (B) dans le sens de la marche (X).

7. Machine de traitement selon l'une quelconque des revendications précédentes, **caractérisée en ce que** le capteur de contact (10, 10') est prévu au niveau d'une cabine de sécurité (4) de l'unité de traitement (B), laquelle cabine de sécurité (4) reçoit le groupe de traitement (3).

8. Machine de traitement selon l'une quelconque des revendications précédentes, **caractérisée en ce que** le capteur de contact (10, 10') est prévu au niveau d'une section de l'unité de traitement (B), qui fait saillie transversalement au sens de la marche (X) de l'unité de traitement (B) au-dessus du banc de machine (1), et est dirigé dans le sens de la marche (X) de l'unité de traitement (B).

9. Machine de traitement selon l'une quelconque des revendications précédentes, **caractérisée en ce que** le capteur fonctionnant sans contact est orienté en partie dans le sens d'une zone de commande.

10. Machine de traitement selon l'une quelconque des revendications précédentes, **caractérisée en ce que** plusieurs capteurs fonctionnant sans contact sont montés au niveau du capteur de contact et sont prévus de préférence au niveau d'une section de bord du capteur de contact.

11. Machine de traitement selon la revendication 10, **caractérisée en ce qu'**un capteur fonctionnant sans contact est orienté dans le sens de la marche (X) de l'unité de traitement (B) et un autre capteur fonctionnant sans contact est orienté en direction d'une zone de commande.
